# EUROPÄISCHE PATENTSCHRIFT

(11) **EP 1 862 212 B1**
(45) Veröffentlichungstag und Bekanntmachung des Hinweises auf die Patenterteilung: **15.06.2011**
(21) Anmeldenummer: 07008365.4
(22) Anmeldetag: 25.04.2007
(51) Int. Cl.: B01D 53/08, C10L 3/10

(54) **Verfahren und Anordnung zur Reinigung von Faulgas**
Method and assembly for cleaning fermentation gas
Procédé et agencement destinés au nettoyage de gaz de fermentation

(30) Priorität: 29.05.2006 DE 102006025226
(43) Veröffentlichungstag der Anmeldung: 05.12.2007
(73) Patentinhaber: Doczyck, Wolfgang, Dipl.-Ing., 46047 Oberhausen (DE)
(72) Erfinder: Doczyck, Wolfgang, Dipl.-Ing., 46047 Oberhausen (DE)
(74) Vertreter: Gesthuysen, von Rohr & Eggert

(56) Entgegenhaltungen:
- EP-A1- 1 561 506
- US-A1- 2006 000 352
- RUTHVEN M.R.: "Principles of Adsorption and Adsorption Processes", 1984, JOHN WILEY & SONS, NEW YORK, CHICHESTER, BRISBANE, TORONTO, SINGAPORE * page 336 - page 342; figure 11.2; table 11.2 *

## Beschreibung

Die vorliegende Erfindung betrifft ein Verfahren zur Reinigung von Faulgas gemäß dem Oberbegriff des Anspruchs 1 sowie eine Anordnung zur Reinigung und insbesondere Verbrennung von Faulgas gemäß dem Oberbegriff des Anspruchs 9.

Faulgase im Sinne der vorliegenden Erfindung entstehen beispielsweise in Kläranlagen, Biogasanlagen und Deponien durch anaerobe Umsetzung organischer Abfallstoffe. Sie enthalten neben Methan, Stickstoff und Kohlendioxid als Hauptbestandteile meist auch nennenswerte Anteile an halogenierten und nicht halogenierten Kohlenwasserstoffverbindungen sowie verschiedene Siliciumverbindungen unterschiedlicher Kettenlängen, insbesondere höher- und niedermolekulare Siloxane. Faulgase aus Kläranlagen enthalten hierbei überwiegend höhermolekulare, unpolare Siliciumverbindungen, während Deponiegas auch niedermolekulare Abbauprodukte, unter anderem Dimethylsilandiol und Tremethylsilanol, aufweist, die eher apolaren Charakter besitzen. Faulgase sind außerdem üblicherweise mit Wasserdampf gesättigt.

Seit langem wird Faulgas zum Betrieb von Gasmotoren, insbesondere in Kraft-Wärme-Kopplungsanlagen, eingesetzt. Diese Nutzung von Faulgas bereitet jedoch mit dem in den letzen Jahren zunehmenden Anteil an Siloxanen im Faulgas Probleme, da diese Siliciumverbindungen starken Verschleiß, hohen Aufwand sowie Schäden an den Gasmotoren verursachen. Die Siloxane fuhren im Verbrennungsprozeß zur Bildung von mineralischen Siliciumverbindungen. Diese können als Stäube im Zylinderraum sowie im Schmieröl wie ein Schleifmittel wirken und sich im Verbrennungsraum als glasartige Schichten anlagern, die gelegentlich abplatzen und große Schäden im Motor verursachen können. Die Reinigung von Faulgas zur Entfernung von Schadstoffen, wie Siliciumverbindungen, insbesondere Siloxanen, spielt daher für die Nutzung von Faulgas eine wesentliche Rolle.

Die US 2006/0000352 A1, die den Ausgangspunkt der vorliegenden Erfindung bildet, betrifft die Entfernung von Schadstoffen, wie Siloxanen, aus einem Gasstrom. In einem ein Adsorbens enthaltenden Filter werden die Schadstoffe adsorbiert. Die adsorbierten Schadstoffe werden durch Erwärmen des Adsorbens desorbiert. Hierbei wird das Adsorbens chargenweise dem Filter entnommen, zur Desorption von Schadstoffen erhitzt und anschließend dem Filter wieder zugeführt.

Aus der EP 1 561 506 A1 sind ein Verfahren und eine Anordnung zur Reinigung von Faulgas bekannt, wobei adsorbierte Verunreinigungen (Schadstoffe) mittels Unterdruck vom Adsorbens eines Filters, insbesondere eines Vorfilters, zumindest teilweise desorbiert werden. Insbesondere ist dem durch Unterdruck desorbierbaren Filter ein weiterer Filter nachgeordnet.

Durch Adsorption lassen sind prinzipiell Siloxane aus dem Faulgas entfernen. Jedoch wird in der Praxis nur ein Bruchteil der theoretisch erzielbaren Beladungskapazität der Adsorbentien erreicht. Ursache hierfür sind die weiteren konkurrierenden Gasbestandteile des Faulgases, wie Wasserdampf und Kohlenwasserstoffe, die die Adsorbierbarkeit der Siloxane in den Adsorbentien drastisch einschränken. Bei voller Beladung des Filters haben die konkurrierenden Gasbestandteile die Siloxane praktisch verdrängt. Die Siloxane bzw. sonstigen siliciumhaltigen Verbindungen werden dann nicht mehr adsorbiert, sondern vorzugsweise in dem nachgeordneten (weiteren) Filter abgeschieden.

Die konkurrierenden Gasbestandteile können - im Gegensatz zu Siloxanen - mit verhältnismäßig hoher Desorptionsrate durch Unterdruck wieder desorbiert werden. Dementsprechend führt die zumindest teilweise Desorption von Verunreinigungen des Filters (adsorbierten Schadstoffen) durch Unterdruck grundsätzlich zu einer einfachen, schnellen und kostengünstigen Vorreinigung.

Eine optimale Desorption wird beim Stand der Technik jedoch noch nicht erreicht.

Der vorliegenden Erfindung liegt die Aufgabe zugrunde, ein Verfahren zur Reinigung von Faulgas und eine Anordnung zur Reinigung und insbesondere Verbrennung von Faulgas anzugeben, wobei eine besonders wirtschaftliche Reinigung, insbesondere eine Minimierung der erforderlichen bzw. auszutauschenden Menge an Adsorbentien, wie Aktivkohle, auf kostengünstige bzw. einfache Weise ermöglicht wird.

Die obige Aufgabe wird durch ein Verfahren gemäß Anspruch 1 oder durch eine Anordnung gemäß Anspruch 9 gelöst. Vorteilhafte Weiterbildungen sind Gegenstand der Unteransprüche.

Ein Aspekt der vorliegenden Erfindung liegt darin, das Adsorbens chargenweise dem Filter zu entnehmen und chargenweise zur zumindest teilweisen Desorption von adsorbierten Schadstoffen unter Unterdruck zu setzen. Dies gestattet eine sehr schnelle und quasi kontinuierliche Desorption und damit Regenerierung des Adsorbens, insbesondere wobei der bauliche Aufwand gering gehalten und bestehende Anlagen einfach entsprechend nachgerüstet werden können. Weiter ist die Desorptionsrate bei kleinen Chargen üblicherweise höher.

Ein weiterer Aspekt liegt darin, dass das Adsorbens während der Absenkung des Drucks auf den Unterdruck mit Gas, insbesondere gereinigtem Faulgas, gespült wird. Dies führt zu einer wesentlichen Steigerung der Effizienz der Desorption bzw. der Desorptionsrate.

Ein Aspekt liegt darin, dass das Adsorbens im erwärmten Zustand unter Unterdruck gesetzt wird. Dies führt zu einer wesentlichen Steigerung der Effizienz der Desorption bzw, der Desorptionsrate.

Die vorgenannten Aspekte können beliebig miteinander und insbesondere insgesamt kombiniert werden. Dies führt zu einer weiteren Steigerung der Effizienz der Desorption bzw. der Desorptionsrate.

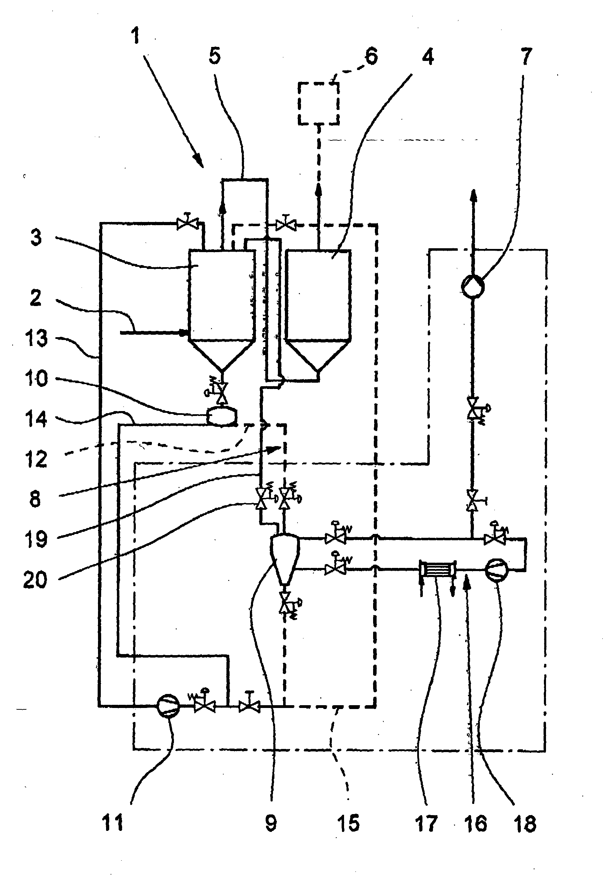

Weitere Vorteile, Merkmale, Eigenschaften und Aspekte der vorliegenden Erfindung ergeben sich aus den Ansprüchen und der folgenden Beschreibung einer bevorzugten Ausführungsform anhand der Zeichnung. Die einzige Figur zeigt
eine schematische Darstellung einer vorschlagsgemäßen Anordnung zur Reinigung und insbesondere Verbrennung von Faulgas.

Die vorschlagsgemäße Anordnung 1 zur Reinigung und Verbrennung von Faulgas 2 umfaßt mindestens einen Filter 3, 4, der beim Darstellungsbeispiel ein Adsorbens, ggf. auch unterschiedliche Adsorbentien, vorzugsweise Aktivkohle, zur Reinigung des Faulgases 2 enthält.

Beim Darstellungsbeispiel sind vorzugsweise zwei Filter 3 und 4 vorgesehen, die insbesondere über eine Leitung 5 in Reihe bzw. hintereinander geschaltet sind und so verschiedene Filterstufen bilden.

Der Filter 3 ist vorzugsweise zur Aufnahme des Adsorbens als Schüttgut, insbesondere in der Art eines Standsilos ausgebildet. So kann das Adsorbens bzw. neues Adsorbens sehr einfach, beispielsweise von oben, insbesondere mit sogenannten Big Bags, oder in sonstiger geeigneter Weise eingeführt oder zugeführt werden. Eine Entnahme von Adsorbens ist insbesondere durch eine am unteren Ende angebrachte Entnahmeöffnung aufgrund der Gravitationskraft sehr einfach möglich. Grundsätzlich sind jedoch auch andere konstruktive Lösungen möglich. Entsprechendes gilt vorzugsweise auch für den Filter 4.

Die vorschlagsgemäße Anordnung 1 weist vorzugsweise einen Gasmotor 6 auf, dem gereinigtes Faulgas zur Verbrennung zuführbar ist. Bei dem Gasmotor 6 handelt es sich vorzugsweise um einen herkömmlichen bzw. angepaßten Innenverbrennungsmotor. Jedoch kann es sich hierbei in einem weiteren Sinne auch um eine Gasturbine, ein gasbetriebenes Heizkraftwerk, insbesondere ein Blockheizkraftwerk, eine sonstige Heizeinrichtung oder dgl. oder um einen Speicher handeln.

Die Anordnung 1 weist eine Unterdruckpumpe 7 auf, um das Adsorbens zur zumindest teilweisen Desorption von zuvor adsorbierten Schadstoffen unter Unterdruck setzen zu können, Im Gegensatz zum Stand der Technik wird das Adsorbens jedoch nicht unmittelbar im Filter 3 bzw. 4 unter Unterdruck gesetzt, sondern vorzugsweise chargenweise dem Filter 3 bzw. 4 entnommen und jeweils nur eine Charge an Adsorbens unter Unterdruck gesetzt, Insbesondere wird lediglich das Adsorbens des ersten Filters 3 durch zumindest teilweise Desorption regeneriert. Wenn das Adsorbens im Filter 3 verbraucht ist bzw. ersetzt werden muß, wird vorzugsweise Adsorbens aus dem nachgeschalteten Filter 4 in den Filter 3 umgefüllt und neues Adsorbens in den Filter 4 eingefüllt.

Jedoch ist es grundsätzlich auch möglich, das Adsorbens des nachgeordneten Filters 4 und/oder von beiden Filtern 3, 4 durch zumindest teilweise Desorption zu regenerieren. Nachfolgend wird lediglich die Entnahme von Adsorbens und deren Generierung durch zumindest teilweise Desorption von adsorbierten Schadstoffen bezüglich des ersten Filters 3 erläutert.

Um Adsorbens dem ersten Filter 3 chargenweise entnehmen und unter Unterdruck setzten zu können, weist die Anordnung 1 vorzugsweise eine Fürdereinrichtung 8 und einen vom Filter 3 vorzugsweise getrennten Unterdruckbehälter 9 auf. Insbesondere handelt es sich hier um einen handelsüblichen, kostengünstigen Unterdruckbehälter. Das Volumen des Unterdruckbehälters 9 beträgt vorzugsweise weniger als 1/5, insbesondere weniger als 1110, des Aufnahmevolumens des Filters 3 für Adsorbens.

Die Fördereinrichtung 8 weist vorzugsweise eine insbesondere unten am Filter 3 angeordnete Entnahmeeinrichtung 10 und eine Förderpumpe 11 auf. Mittels der Entnahmeeinrichtung 10, die insbesondere eine zugeordnete Schleuse, Einzug-/Auslaßventil oder dgl. umfaßt, ist vorzugsweise eine definierte Menge an Adsorbens dem Filter 3 oder jeweils also eine bestimmte Charge bzw. Menge, dem Filter 3 entnehmbar.

Das entnommene Adsorbens ist von der Entnahmeeinrichtung 10 mittels der gestrichelt angedeuteten ersten Förderleitung 12 des Unterdruckgefäßes 9 förderbar. Insbesondere erfolgt die Förderung durch Gas, besonders bevorzugt gereinigtes Faulgas, das mittels der Leitung 13 dem Filter 3 entnommen und von der Förderpumpe 11 unter Druck gesetzt und über eine Leitung 14 zugeführt wird. Jedoch sind hier auch andere konstruktive Lösungen möglich. Beispielsweise ist auch möglich, dass der Unterdruckbehälter 9 unmittelbar im oder am Filter 3 angeordnet ist. Alternativ oder zusätzlich zu der Förderung des Adsorbens durch Gas kann eine sonstige Förderung erfolgen.

Nach der nachfolgend noch näher erläuterten Regenerierung des Adsorbens im Unterdruckbehälter 9, also insbesondere einer zumindest teilweisen Desorption von zuvor adsorbierten Schadstoffen, wird das Adsorbens über eine zweite, ebenfalls gestrichelte Förderleitung 15, vorzugsweise wieder durch von der Förderpumpe 11 unter Druck gesetztes, gereinigtes Faulgas oder sonstiges Gas zurück in den Filter 3 gefördert, Im Unterdruckbehälter 9 erfolgt also immer nur eine chargenweise Regenerierung des Adsorbens. Die Entnahme und Rückförderung des Adsorbens kann sehr schnell erfolgen, so dass der Filter 3 quasi ununterbrochen zur Filterung nutzbar ist. Insbesondere ist es dann nicht erforderlich, auf einen parallelen Filter umzuschalten, auch wenn dies grundsätzlich möglich ist. Die chargenweise Regenerierung ermöglicht also insbesondere einen quasi kontinuierlichen Betrieb.

Wenn der Unterdruckbehälter 9 mit einer neuen Charge an Adsorbens befüllt worden ist, wird vorzugsweise zunächst das Adsorbens im Unterdruckbehälter 9 erwärmt. Die Erwärmung erfolgt vorzugsweise dadurch, dass erhitztes Gas durch den Unterdruckbehälter 9 geleitet wird. Jedoch sind hier auch andere Lösungen möglich, um das Adsorbens in gewünschter Weise zu erwärmen.

Beim Darstellungsbeispiel weist die Anordnung 1 eine Heizeinrichtung 16 auf, die vorzugsweise einen Wärmetauscher 17 und eine Umwälzpumpe 18 umfaßt, so dass Gas, vorzugsweise gereinigtes Faulgas, mittels des Wärmetauschers 17 erhitzt und mittels der Umwälzpumpe 18 im Kreislauf durch den Wärmetauscher 17 und dem Unterdruckbehälter 9 geleitet werden kann, um das Adsorbens im Unterdruckbehälter 9 in gewünschter Weise zu erwärmen. Das Erwärmen des Adsorbens führt bereits zu einer ersten Desorption von adsorbierten Schadstoffen.

Besonders bevorzugt erfolgt während des Erwärmens bereits ein Spülen mit Gas, insbesondere gereinigtem Faulgas. Der Begriff "Spülen" ist bei der vorliegenden Erfindung dabei so zu verstehen, dass frisches, also mit desorbierten Schadstoffen noch nicht verunreinigtes Gas zugeführt bzw. zugemischt wird. Beim Darstellungsbeispiel erfolgt dies vorzugsweise dadurch, dass mittels der Unterdruckpumpe 7, die wahlweise unmittelbar oder über den Heizkreislauf an den Unterdruckbehälter 9 angeschlossen ist, gereinigtes Faulgas über eine Ansaugleitung 19 vom ersten Filter 3 oder zweiten Filter 4 in bzw. durch den Unterdruckbehälter 9 gesaugt und dadurch das Adsorbens in gewünschter Weise - insbesondere bereits während des Erwärmens - gespült wird. Zur Regulierung des Spülstroms ist insbesondere ein entsprechendes Ventil einsetzbar, beispielsweise ein entsprechend einstellbares Stell- oder Drosselventil 20 in der Ansaugleitung 19.

Das Spülen während des Erwärmens des Adsorbens führt zu einer zusätzlichen Erhöhung der Desorptionsrate bereits beim Erwärmen.

Nach dem Erwärmen des Adsorbens im Unterdruckbehälter 9 wird der Unterdruckbehälter 9 unter Unterdruck gesetzt, um eine weitere Desorption von adsorbierten Schadstoffen zu erreichen. Problematisch ist, dass mit abnehmendem Druck weniger Wärme dem Adsorbens im Unterdruckbehälter 9 über den von der Umwälzpumpe 18 im Kreislauf geförderten Gasstrom zuführbar ist.

Aufgrund der Druckabsenkung bei noch erwärmten Adsorbens wird gegenüber der herkömmlichen Druckabsenkung bei Raumtemperatur ein höherer Grad an Desorption von adsorbierten Schadstoffen ermöglicht. Die Desorption wird also wesentlich effizienter.

Vorzugsweise erfolgt auch während der Absenkung des Drucks auf den Unterdruck noch ein Spülen des Adsorbens im Unterdruckbehälter 9 mit Gas, insbesondere bereits gereinigtem Faulgas, wie bereits bei dem Erwärmen beschrieben. Dies führt wiederum zu einer Erhöhung der Desorptionsrate bzw. des erreichbaren Desorptionsgrads.

Vorschlagsgemäß werden also insbesondere die Temperaturerhöhung und das gleichzeitige Spülen mit frischem Gas zur Verbesserung der Desorption kombiniert. Die Temperaturerhöhung und die Druckabsenkung zur Verbesserung der Desorption werden kombiniert. Alternativ oder zusätzlich werden vorschlagsgemäß weiter vorzugsweise die Druckabsenkung und das gleichzeitige Spülen mit frischem Gas zur Verbesserung der Desorption kombiniert. Besonders bevorzugt werden alle drei Maßnahmen miteinander kombiniert, um eine optimale Desorption zu ermöglichen.

Die besonders bevorzugte chargenweise Desorption bzw. Regenerierung des Adsorbens führt zu dem Vorteil, dass ein verhältnismäßig kleiner und verhältnismäßig kostengünstiger Unterdruckbehälter 9 einsetzbar ist, der insbesondere auch den erforderlichen Temperaturen standhält. Besonders bevorzugt erfolgt nämlich eine Erwärmung auf mindestens 250 °C, besonders bevorzugt etwa 300 °C oder sogar mehr. Gleiches gilt auch für die Unterdruckpumpe 7 und Umwälzpumpe 18. Da das zu fördernde Gasvolumen entsprechend der verringerten Menge an Adsorbens geringer ist, können kleinere und kostengünstigere Pumpen 7, 18 eingesetzt werden.

Um die gewünschten und erläuterten Funktionen ausführen zu können, sind entsprechende Ventile, Steuerungen und dgl. vorgesehen. In der Figur sind lediglich beispielhaft einige Ventile der Anordnung 1 angedeutet, ohne dass diese im Einzelnen bezeichnet werden.

Gemäß einer bevorzugten Ausführungsvariante bilden zumindest der Unterdruckbehälter 9 und die Heizeinrichtung 16 sowie die Unterdruckpumpe 7 - besonders bevorzugt alle Komponenten innerhalb des in der einzigen Figur strichpunktierten Bereichs - eine mobile Baueinheit, beispielsweise in Form eines leicht transportierbaren Containers oder dgl. Dies gestattet eine sehr einfache und kostengünstige Vormontage und/oder anschließende Nachrüstung von bereits bestehenden Filteranlagen. Vorzugsweise muß dann nur die Entnahmeeinrichtung 10 an dem zugeordneten Filter 3 angebracht und über die erste Förderleitung 12 an die Baueinheit angeschlossen werden. Weiter sind lediglich einige Gasanschlüsse, Energieanschlüsse oder dgl. erforderlich.

Die vorschlagsgemäße Anordnung 1 und das vorschlagsgemäße Verfahren gestatten also eine an den jeweiligen Einzelfall angepaßte optimale Reinigung im Hinblick auf die Einhaltung eines Grenzwerts für die Verunreinigung mit Siliciumverbindungen, insbesondere Siloxanen, für den Gasmotor 6, wobei eine optimale Ausnutzung der Beladungskapazität des Adsorbens, insbesondere der Aktivkohle, mit Siliciumverbindungen bzw. eine Minimierung der erforderlichen Menge an Adsorbens, insbesondere Aktivkohle, bezogen auf den Gesamtstrom an Faulgas 2 ermöglicht wird bzw. werden.

## Patentansprüche

1. Verfahren zur Reinigung von Schadstoffe, insbesondere Siliciumverbindungen, enthaltendem Faulgas (2), wobei die Schadstoffe von einem Filter (3, 4) mit einem Adsorbens, vorzugsweise Aktivkohle, adsorbiert werden, wobei das Adsorbens chargenweise dem Filter (3, 4) entnommen wird und adsorbierte Schadstoffe mittels Temperaturerhöhung vom Adsorbens zumindest teilweise desorbiert werden,
**dadurch gekennzeichnet,**
**dass** das Adsorbens nach der Erwärmung und im erwärmten Zustand zur zumindest teilweisen Desorption von Schadstoffen unter Unterdruck gesetzt und anschließend dem Filter (3, 4) wieder zugeführt wird.

2. Verfahren nach Anspruch 1, **dadurch gekennzeichnet, dass** das Adsorbens chargenweise durch insbesondere unter Druck gesetztes Gas, vorzugsweise gereinigtes Faulgas, in einen vom Filter (3, 4) insbesondere getrennten Unterdruckbehälter (9) zur anschließenden zumindest teilweisen Desorption von Schadstoffen gefördert wird.

3. Verfahren nach Anspruch 1 oder 2, **dadurch gekennzeichnet, dass** das entnommene Adsorbens nach der zumindest teilweisen Desorption von Schadstoffen durch insbesondere unter Druck gesetztes Gas, vorzugsweise gereinigtes Faulgas, wieder in den Filter (3, 4) zurück gefördert wird.

4. Verfahren nach einem der voranstehenden Ansprüche, **dadurch gekennzeichnet, dass** das Adsorbens durch erhitztes Gas, vorzugsweise gereinigtes Faulgas, erwärmt wird, insbesondere wobei das Gas durch einen Wärmetauscher (17) erhitzt und im Kreislauf durch das zu erwärmende Adsorbens geleitet wird.

5. Verfahren nach einem der voranstehenden Ansprüche, **dadurch gekennzeichnet, dass** das Adsorbens während des Erwärmens mit Gas, vorzugsweise gereinigtem Faulgas, gespült wird.

6. Verfahren nach einem der voranstehenden Ansprüche, **dadurch gekennzeichnet, dass** das Absorbens während der Absenkung des Unterdrucks zur zumindest teilweisen Desorption von Schadstoffen mit Gas, vorzugsweise gereinigtem Faulgas, gespült wird.

7. Verfahren nach einem der voranstehenden Absprüche, **dadurch gekennzeichnet, dass** das gereinigte Faulgas in einem Gasmotor (6) verbrannt wird.

8. Verfahren nach einem der voranstehenden Ansprüche, **dadurch gekennzeichnet, dass** während der Absenkung des Drucks auf den Unterdruck zur zumindest teilweisen Desorption von Schadstoffen das Adsorbens mit gereinigtem Faulgas oder sonstigem Gas gespült wird.

9. Anordnung (1) zur Reinigung von Schadstoffe, insbesondere Siliciumverbindungen, enthaltendem Faulgas (2), insbesondere zur anschließenden Verbrennung,
mit einem Filter (3, 4) mit einem Adsorbens, vorzugsweise Aktivkohle, zur Filterung des Faulgases durch Adsorption von Schadstoffen,
insbesondere mit einem dem Filter (3, 4) nachgeordneten Gasmotor (6) zur Verbrennung des gereinigten Faulgases,
mit einer Fördereinrichtung (8) für das Adsorbens, so dass das Adsorbens chargenweise dem Filter (3, 4) entnehmbar ist,
mit einer Heizeinrichtung (16), um das Adsorbens zur zumindest teilweisen Desorption von Schadstoffen zu erwärmen,
**dadurch gekennzeichnet,**
**dass** die Anordnung (1) einen vom Absorbensraum des Filters (3, 4) getrennten Unterdruckbehälter (9) aufweist, in den das Adsorbens förderbar und dort erwärmbar ist, und dass die Anordnung (1) weiterhin eine Unterdruckpumpe (7) aufweist, wobei die jeweilige Charge von Adsorbens im Unterdruckbehälter nach der Erwärmung zur zumindest teilweisen Desorption von Schadstoffen mittels der Unterdruckpumpe (7) zur zumindest teilweisen Desorption von Schadstoffen vom Adsorbens unter Unterdruck setzbar und anschließend dem
Filter (3, 4) wieder zuführbar ist und wobei die Anordnung (1) eine Ansaug- bzw. Gaszuleitung (19) mit einem zugeordneten Ventil (20) zur Zuführung von gereinigtem Faulgas in den Unterdruckbehälter (9) aufweist, um das Adsorbens während des Erwärmens und während der Absenkung des Drucks auf den Unterdruck mit gereinigtem Faulgas zu spülen.

10. Anordnung nach Anspruch 9, **dadurch gekennzeichnet, dass** der Filter (3, 4) das Adsorbens als Schüttgut aufnimmt und/oder insbesondere am unteren Ende eine Entnahmeeinrichtung (10) zur chargenweisen Entnahme von Adsorbens aufweist.

11. Anordnung nach Anspruch 9 oder 10, **dadurch gekennzeichnet, dass** die Anordnung (1) eine Förderpumpe (11) für Gas, insbesondere gereinigtes Faulgas, aufweist, um das Gas unter Druck zu setzen und das Adsorbens chargenweise in den Unterdruckbehälter (9) und/oder aus diesem wieder zurück in den Filter (3, 4) zu fördern.

12. Anordnung nach einem der Ansprüche 9 bis 11, **dadurch gekennzeichnet, dass** die Heizeinrichtung (16) einen Wärmetauscher (17) und vorzugsweise eine zugeordnete Umwälzpumpe (18) aufweist, um Gas, vorzugsweise gereinigtes Faulgas, mittels des Wärmetauschers (17) zu erhitzen und insbesondere im Kreislauf durch das zu erwärmende Adsorbens bzw. den Unterdruckbehälter (9) zu leiten.

13. Anordnung nach einem der Ansprüche 9 bis 12, **dadurch gekennzeichnet, dass** die Anordnung (1) zwei in Reihe geschaltete Filter (3, 4) aufweist, die verschiedene Filterstufen zur Reinigung des Faulgases bilden.

## Claims

1. Method for the purification of fermentation gas (2) containing pollutants, in particular silicon compounds, the pollutants being adsorbed by a filter (3 , 4) having an adsorbent, preferably activated charcoal, the adsorbent being extracted batchwise from the filter (3, 4), and adsorbed pollutants being at least partially desorbed from the adsorbent by means of a temperature rise,
**characterized in**
**that**, for the at least partial desorption of pollutants, the adsorbent is put under a vacuum after heating and in the heated state and is subsequently delivered back to the filter (3, 4) again.

2. Method according to Claim 1, **characterized in that** the adsorbent is conveyed batchwise by gas, preferably purified fermentation gas, which, in particular, is put under pressure, into a vacuum tank (9) which, in particular, is separated from the filter (3, 4), for a subsequent at least partial desorption of pollutants.

3. Method according to Claim 1 or 2, **characterized in that** the extracted adsorbent, after the at least partial desorption of pollutants, is conveyed back into the filter (3, 4) again by gas, preferably purified fermentation gas, which, in particular, is put under pressure.

4. Method according to one of the preceding claims, **characterized in that** the adsorbent is heated by heated gas, preferably purified fermentation gas, in particular the gas being heated by a heat exchanger (17) and being circulated through the adsorbent to be heated.

5. Method according to one of the preceding claims, **characterized in that** the adsorbent, during heating, is scavenged with gas, preferably purified fermentation gas.

6. Method according to one of the preceding claims, **characterized in that** the adsorbent is scavenged with gas, preferably purified fermentation gas, during the lowering of the vacuum for the at least partial desorption of pollutants.

7. Method according to one of the preceding claims, **characterized in that** the purified fermentation gas is burnt in a gas engine (6).

8. Method according to one of the preceding claims, **characterized in that** the adsorbent is scavenged with purified fermentation gas or other gas during the lowering of the pressure to the vacuum for the at least partial desorption of pollutants.

9. Arrangement (1) for the purification of fermentation gas (2) containing pollutants, in particular silicon compounds, in particular for subsequent combustion,
with a filter (3, 4) having an adsorbent, preferably activated charcoal, for filtering the fermentation gas by adsorption of pollutants,
in particular with a gas engine (6), following the filter (3, 4), for the combustion of the purified fermentation gas,
with a conveying device (8) for the adsorbent, so that the adsorbent can be extracted batchwise from the filter (3, 4),
with a heating device (16) in order to heat the adsorbent for the at least partial desorption of pollutants,
**characterized in**
**that** the arrangement (1) has a vacuum tank (9) which is separated from the adsorbent space of the filter (3, 4) and into which the adsorbent can be conveyed and can be heated there, and that the arrangement (1) has, furthermore, a vacuum pump (7), the respective batch of adsorbent in the vacuum tank, after being heated for the at least partial desorption of pollutants, being capable of being put under a vacuum by means of the vacuum pump (7) for the at least partial desorption of pollutants from the adsorbent and subsequently being capable of being delivered back to the filter (3, 4) again, and the arrangement (1) having an intake line or gas feed line (19) with an assigned valve (20) for feeding purified fermentation gas into the vacuum tank (9), in order to scavenge the adsorbent with purified fermentation gas during heating and during the lowering of the pressure to the vacuum.

10. Arrangement according to Claim 9, **characterized in that** the filter (3, 4) receives the adsorbent as bulk material and/or, in particular, has at the lower end an extraction device (10) for the batchwise extraction of adsorbent.

11. Arrangement according to Claim 9 or 10, **characterized in that** the arrangement (1) has a feed pump (11) for gas, in particular purified fermentation gas, in order to put the gas under pressure and to convey the adsorbent batchwise into the vacuum tank (9) and/or out of the latter back into the filter (3, 4) again.

12. Arrangement according to one of Claims 9 to 11, **characterized in that** the heating device (16) has a heat exchanger (17) and preferably an assigned circulating pump (18), in order to heat gas, preferably purified fermentation gas, by means of the heat exchanger (17) and, in particular, to circulate it through the adsorbent to be heated and/or the vacuum tank (9).

13. Arrangement according to one of Claims 9 to 12, **characterized in that** the arrangement (1) has two series-connected filters (3, 4) which form different filter stages for purifying the fermentation gas.

## Revendications

1. Procédé d'épuration de gaz de fermentation (2) contenant des substances nocives, en particulier des composés de silicium, les substances nocives étant adsorbées par un filtre (3, 4) doté d'un adsorbant, de préférence du charbon actif, l'adsorbant étant retiré du filtre (3, 4) par charges et les substances nocives adsorbées étant au moins partiellement désorbées au moins partiellement de l'adsorbant par augmentation de température,
**caractérisé en ce**
**que** après l'échauffement et à l'état chauffé, l'adsorbant est exposé à une désorption au moins partielle des substances nocives par dépression et est ensuite ramené dans le filtre (3,4).

2. Procédé selon la revendication 1, **caractérisé en ce que** l'adsorbant est transporté par charges par le gaz, en particulier placé en dépression, de préférence le gaz de fermentation épuré, dans un récipient (9) en dépression, en particulier séparé du filtre (3, 4), pour désorber ensuite au moins une partie des substances nocives.

3. Procédé selon les revendications 1 ou 2, **caractérisé en ce que** l'adsorbant retiré après la désorption au moins partielle des substances nocives est ramené dans le filtre (3, 4) par le gaz, en particulier mis sous pression, et de préférence le gaz de fermentation épuré.

4. Procédé selon l'une des revendications précédentes, **caractérisé en ce que** l'adsorbant est chauffé par du gaz chauffé, en particulier du gaz de fermentation chauffé, le gaz étant chauffé en particulier par un échangeur de chaleur (17) et amené en circuit fermé à travers l'adsorbant à chauffer.

5. Procédé selon l'une des revendications précédentes, **caractérisé en ce que** pendant le chauffage, l'adsorbant est balayé par du gaz, de préférence du gaz de fermentation épuré.

6. Procédé selon l'une des revendications précédentes, **caractérisé en ce que** pendant l'abaissement de la pression en vue de la désorption au moins partielle des substances nocives, l'adsorbant est balayé par du gaz et de préférence par du gaz de fermentation épuré.

7. Procédé selon l'une des revendications précédentes, **caractérisé en ce que** le gaz de fermentation épuré est brûlé dans un moteur (6) à gaz.

8. Procédé selon l'une des revendications précédentes, **caractérisé en ce que** pendant l'abaissement de la pression en vue de la désorption au moins partielle des substances nocives, l'adsorbant est balayé par du gaz de fermentation épuré ou un autre gaz.

9. Système (1) d'épuration de gaz de fermentation (2) contenant des substances nocives, en particulier des composés de silicium, en particulier en vue de sa combustion ultérieure, et présentant
un filtre (3, 4) doté d'un adsorbant, de préférence de charbon actif, qui filtre le gaz de fermentation par adsorption des substances nocives,
en particulier un moteur (6) à gaz disposé à aval du filtre (3, 4) et brûlant le gaz de fermentation épuré,
un dispositif de transport (8) de l'adsorbant qui permet de retirer l'adsorbant du filtre (3,4) par charges,
un dispositif de chauffage (16) qui chauffe l'adsorbant en vue d'une désorption au moins partielle des substances nocives,
**caractérisé en ce**
**que** le système (1) présente un récipient (9) en dépression séparé de l'espace d'adsorbant du filtre (3, 4) et dans lequel l'adsorbant peut être transporté pour y être chauffé, et que le système (1) présente en outre une pompe (7) à dépression, chaque charge d'adsorbant pouvant être mise en dépression dans le récipient en dépression après avoir été chauffée pour désorber au moins en partie les substances nocives au moyen de la pompe (7) à dépression en vue de désorber au moins en partie les substances nocives de l'adsorbant, et pouvant ensuite être ramenée dans le filtre (3, 4), le système (1) présentant un conduit (19) d'aspiration ou à gaz auquel est associée une soupape (20) pour amener le gaz de fermentation épuré dans le récipient (9) en dépression, pour balayer par du gaz de fermentation épuré l'adsorbant pendant son chauffage et pendant la diminution de la pression jusqu'à la dépression.

10. Système selon la revendication 9, **caractérisé en ce que** le filtre (3, 4) reprend l'adsorbant en vrac et/ou présente à son extrémité inférieure un dispositif de prélèvement (10) qui permet de prélever des charges d'adsorbant.

11. Système selon les revendications 9 ou 10, **caractérisé en ce que** le système (1) présente une pompe (11) de refoulement de gaz et en particulier du gaz de fermentation épuré pour placer le gaz sous pression et transporter l'adsorbant par charges dans le récipient (9) en dépression et/ou le renvoyer depuis ce récipient jusque dans le filtre (3, 4).

12. Système selon l'une des revendications 9 à 11, **caractérisé en ce que** le dispositif de chauffage (16) présente un échangeur de chaleur (17) auquel est de préférence associée une pompe de recirculation (18), pour chauffer le gaz et de préférence le gaz de fermentation épuré au moyen de l'échangeur de chaleur (17) et en particulier l'amener en circuit fermé à travers l'adsorbant à chauffer ou dans le récipient (9) en dépression.

13. Système selon l'une des revendications 9 à 12, **caractérisé en ce que** le système (1) présente deux filtres (3, 4) raccordés en série qui forment les différents étages de filtre d'épuration du gaz de fermentation.
